# EUROPÄISCHE PATENTSCHRIFT

(11) **EP 0 781 014 B1**
(45) Veröffentlichungstag und Bekanntmachung des Hinweises auf die Patenterteilung: **01.09.2004**
(21) Anmeldenummer: 96118339.9
(22) Anmeldetag: 15.11.1996
(51) Int. Cl.: H04L 27/34, H04L 1/24

(54) **Anordnung zum Darstellen der Signalzustände eines QAM-Signals**
Apparatus for the display of signal states of a QAM signal
Dispositif pour la présentation des états de signaux d'un signal MAQ

(30) Priorität: 21.12.1995 DE 19547896
(43) Veröffentlichungstag der Anmeldung: 25.06.1997
(73) Patentinhaber: Rohde & Schwarz GmbH & Co. KG, 81671 München (DE)
(72) Erfinder: Balz, Christoph, Dipl.-Ing., 81543 München (DE)
(74) Vertreter: Körfer, Thomas, Dipl.-Phys.

(56) Entgegenhaltungen:
- DE-A- 19 515 037
- US-A- 4 818 931
- US-A- 4 918 708
- "USING VECTOR MODULATION ANALYSIS IN THE INTEGRATION, TROUBLESHOOTING AND DESIGN OF DIGITAL RF DOMMUNICATIONS SYSTEMS" PRODUCT NOTE HP 89400-8, Januar 1994 (1994-01), XP002130914

## Beschreibung

Die Erfindung betrifft und geht aus von einer Anordnung laut Oberbegriff des Hauptanspruches.

Eine Anordnung dieser Art ist bekannt (Datenblatt des Vektorsignalanalysator HP 89400-8 der Firma Hewlett Packard). Die am IQ-Ausgang des QAM-Demodulators seriell ausgegebenen IQ-Werte werden nacheinander in der Reihenfolge ihres Auftretens in einem Datenspeicher zwischengespeichert und können dann daraus über einen Prozessor ausgelesen und auf dem Bildschirm in der IQ-Ebene (XY-Koordinaten-Ebene) grafisch dargestellt werden. Hierfür ist ein Datenspeicher mit großem Speicherumfang erforderlich, für nur 4096 Signalzustände ist beispielsweise ein 4 Mbyte großer Datenspeicher erforderlich (Seite 4 des HP Datenblattes). Außerdem können mit dieser bekannten Anordnung die möglichen Fehler der Datenübertragungsstrecke zwischen Sender und Empfänger nur auf komplizierte Weise gemessen werden.

Es ist Aufgabe der Erfindung, eine Anordnung der eingangs erwähnten Art zu schaffen, die im Aufbau einfach und preiswert ist und die außerdem eine universelle Betriebsweise und Auswertung der IQ-Werte ermöglicht.

Diese Aufgabe wird ausgehend von einer Anordnung laut Oberbegriff des Hauptanspruches durch dessen kennzeichnende Merkmale gelöst. Vorteilhafte Weiterbildungen ergeben sich aus den Unteransprüchen.

Bei der erfindungsgemäßen Anordnung ist jedem einzelnen digitalisierten IQ-Wert eine gesonderte Adresse des Datenspeichers zugeordnet und es ist damit möglich, für jedes einzelne einem IQ-Wert zugeordnete Pixel jeweils gesonderte Informationen abzuspeichern. Eine Möglichkeit hierfür ist, daß unter jeder Adresse jeweils die gewünschte Pixel-Haltezeit abgespeichert wird, eine andere Möglichkeit ist, unter jeder Adresse die Häufigkeit abzuspeichern, mit der diese jeweilige Adresse und damit der zugehörige IQ-Wert innerhalb eines vorgegebenen Erfassungszeitraumes auftritt. Neben diesen beiden besonders vorteilhaften Möglichkeiten können unter den jeweiligen Adressen auch beliebig andere Informationen abgespeichert werden, die bei der Anzeige der jeweiligen Pixel berücksichtigt werden sollen, beispielsweise unterschiedliche Helligkeiten oder unterschiedliche Farben für die Pixel-Darstellung.

Für eine erfindungsgemäße Anordnung ist nur ein Datenspeicher von relativ geringem Speicherumfang erforderlich, für 8-Bit-quantisierte IQ-Werte ist beispielsweise nur ein 65 536-Worte-Datenspeicher erforderlich. Trotzdem können mit der erfindungsgemäßen Anordnung nicht nur senderseitige Fehler des Modulators wie IQ-Phasenfehler, IQ-Amplituden-Ungleichheiten bzw. die Trägerunterdrückung gemessen werden, sondern vor allem auch Fehler der Übertragungsstrecke zwischen Sender und Empfänger, beispielsweise der Phasenjitter, die sinusförmige Interferenz, das Signal-Rausch-Verhältnis bzw. die Vektorfehlergröße (VEM = Vektor Error Magnitude) RMS und Spitze.

Die Erfindung wird im folgenden anhand einer schematischen Zeichnung an einem Ausführungsbeispiel näher erläutert.

Die Fig. zeigt das Prinzipschaltbild einer Anordnung zum grafischen Darstellen der Signalzustände eines Quadratur-Amplituden (QAM)-modulierten Signals in der IQ-Ebene auf dem Bildschirm 7 einer Anzeigeeinrichtung. Der I (IN-Phase)- und Q (Quadratur)-Ausgang 1 des Demodulators 2 eines nicht näher dargestellten QAM-Empfängers ist über eine Datenleitung 3 unmittelbar mit dem Eingang 4 eines digitalen Signalprozessors 5 verbunden. Im Signalprozessor 5 werden aus diesen seriell zugeführten I- und Q-Werten die zugehörigen Positionen der Signalzustände in der IQ-Ebene interpretiert. Über die Datenleitung 6 kann der entsprechende Signalzustand in der IQ-Ebene auf dem Bildschirm 7 der Anzeigeeinrichtung dargestellt werden. Die Anzeigeeinrichtung ist beispielsweise ein LC-(Liquid Cristal) Display. Der Prozessor 5 ist außerdem über eine Datenleitung 8 mit einem Datenspeicher 9 verbunden. Jedem möglichen IQ-Wert ist eine eigene Adresse des Datenspeichers zugeordnet. In dem dargestellten Ausführungsbeispiel besteht das in der IQ-Ebene auf dem Bildschirm 7 darzustellende Zustandsdiagramm aus 256 x 256 = 65 536 IQ-Werten und ebensovielen Pixeln (Punkte des Bildschirmes). Die Position eines jeden Pixels auf dem Bildschirm läßt sich damit also mit 16 Bit beschreiben. Der Datenspeicher 9 besitzt seinerseits 65 536 Adressen, von denen jede wiederum durch 16 Bit beschrieben ist. Unter jeder der Adressen des Datenspeichers 9 können beliebige Informationen für die einzelnen Pixel abgespeichert sein.

Eine erste Betriebsmöglichkeit für eine erfindungsgemäße Anordnung besteht darin, unter jeder Adresse des Datenspeichers 9 eine Information über die Zeit abzuspeichern, in der die einzelnen Pixel jeweils am Bildschirm sichtbar sein sollen. Wird vom Benutzer beispielsweise eine Pixel-Haltezeit von 20 Sekunden bei einer Auffrischrate von 1 Sekunde gewünscht, so wird in den einzelnen, den gemessenen Pixeln zugeordneten Adressen des Datenspeichers 9 beispielsweise die Zahl 20 eingespeichert. Dies kann durch den Benutzer beispielsweise über eine Haltezeit-Einstelleinrichtung 10 erfolgen, die den einzelnen Speicherzellen des Datenspeichers 9 zugeordnet ist. Bei der Darstellung der IQ-Werte über den Prozessor 5 auf dem Bildschirm 7 wird jeweils der Inhalt jeder einzelnen Adresse des Datenspeichers 9 abgefragt. Ein Pixel wird am Display dargestellt, wenn der Inhalt der zugeordneten Adresse >0 ist. Wird über den Prozessor 5 ein Pixel auf dem Bildschirm dargestellt, so wird gleichzeitig unter der zugeordneten Adresse der Inhalt der Speicherzelle um 1 vermindert. Ist in dem gewählten Beispiel ein Pixel 20 mal angezeigt worden und so die gewählte Pixelhaltezeit erreicht, so wird es nicht mehr am Bildschirm angezeigt. Bei erneutem Auftreten des betrachteten IQ-Wertes wird die Speicherzelle unter dieser Adresse erneut mit der Zahl 20 geladen und ein erneutes Auftreten dieses Pixels mit der gewählten Haltezeit dargestellt. Da die Wahl der Haltezeit beliebig groß sein kann ist auch eine unendlich lange Haltezeit einstellbar. In diesem Fall entfällt das Vermindern des Inhaltes der Speicherzelle bei Auslesen.

Eine andere Betriebsmöglichkeit für die Anzeigeeinrichtung besteht darin, unter jeder Adresse jeweils abzuspeichern, wie häufig innerhalb eines vorgegebenen Erfassungszeitraumes ein Signalzustand auftritt. Über einen Steuerschalter 11 kann eine vorbestimmte Erfassungszeit eingestellt werden. Innerhalb dieser vorbestimmten Zeitspanne wird über den Prozessor 5 jeweils unter einer Adresse des Datenspeichers 9 der Inhalt der Speicheradresse um 1 erhöht, wenn über den Prozessor jeweils ein IQ-Wert festgestellt wird, der dieser Adresse des Datenspeichers und damit der jeweiligen Pixelposition zugeordnet ist. Auf diese Weise wird unter jeder Adresse des Datenspeichers die Häufigkeit abgespeichert, mit der diese Adresse und damit das zugehörige Pixel jeweils auftritt. Daraus können dann die verschiedensten Fehlerberechnungen durchgeführt werden.

Auf dem Bildschirm der Anzeigevorrichtung 7 sind in dem dargestellten Ausführungsbeispiel die Signalzustände eines 64 QAM-Signals dargestellt, daraus kann der Benutzer dann die Art der verwendeten Modulation und deren Qualität bestimmen.

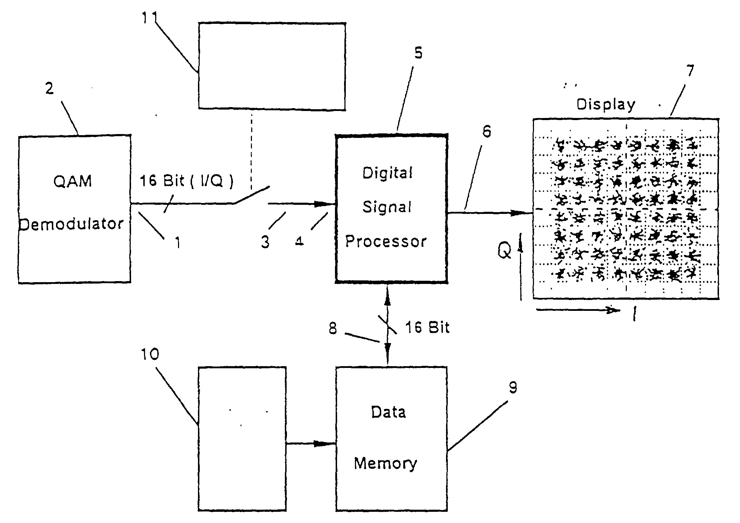

## Patentansprüche

1. Anordnung zum grafischen Darstellen der am Ausgang (1) eines Demodulators (2) für quadratur-amplitudenmodulierte Signale ausgegebenen IQ-Werte in der IQ-Ebene auf dem Bildschirm einer Anzeigeeinrichtung (7), mit einem Datenspeicher (9) und einem die Anzeigeeinrichtung (7) steuernden Prozessor (5),
**dadurch gekennzeichnet,**
**daß** jedem einzelnen IQ-Wert eine Adresse des Datenspeichers (9) und jeder Adresse des Datenspeichers (9) ein Pixel der Anzeigeeinrichtung (7) zugeordnet ist,
**daß** die Anordnung zum Speichern einer dem jeweiligen IQ-Wert zugeordneten Information unter jeder Adresse dieses Datenspeichers (9) eingerichtet ist und
**daß** der Prozessor (5) unmittelbar mit dem IQ-Ausgang des Demodulators (2) verbunden und so ausgebildet ist, daß er für jeden IQ-Wert die zugehörige IQ-Wert-Adresse im Datenspeicher (9) bestimmt.

2. Anordnung nach Anspruch 1,
**dadurch gekennzeichnet,**
**daß** die Anordnung zum Speichern einer vorgegebenen Pixel-Haltezeit unter jeder Adresse des Datenspeichers (9) bei Auftreten des entsprechenden IQ-Wertes eingerichtet ist.

3. Anordnung nach Anspruch 1 oder 2,
**dadurch gekennzeichnet,**
**daß** die Anordnung zum Speichern der Häufigkeit, mit der eine Adresse und damit der entsprechende IQ-Wert in einer vorgegebenen Erfassungszeit bestimmt worden ist, unter der jeweiligen Adresse des Datenspeichers (9) eingerichtet ist.

## Claims

1. Arrangement for the graphic display of the IQ values supplied at the output (1) of a demodulator (2) for quadrature-amplitude-modulated signals in the IQ plane on the screen of a display device (7), with a data memory (9) and a processor (5) for controlling the display device,
**characterised in that**,
an address of the data memory (9) is allocated to each individual IQ value, and a pixel of the display device (7) is allocated to each address of the data memory (9),
that the arrangement is set up to store an item of information allocated to each IQ value at each address of this data memory (9) and
that the processor (5) is connected directly to the IQ output of the demodulator (2) and designed in such a manner that, for each IQ value, it determines the associated IQ-value-address in the data memory (9).

2. Arrangement according to claim 1,
**characterised in that**
the arrangement is set up to store a predetermined pixel-holding time at each address of the data memory (9) in the event of an occurrence of the corresponding IQ value.

3. Arrangement according to claim 1 or 2,
**characterised in that**
the arrangement is set up to store the frequency, with which an address, and therefore also the corresponding IQ value, has been determined within a predetermined registration time at the associated address of the data memory (9).

## Revendications

1. Dispositif pour la représentation graphique des valeurs IQ éditées à la sortie (1) d'un démodulateur (2) pour des signaux en modulation d'amplitude en quadrature dans le plan IQ sur l'écran d'un dispositif d'affichage (7) avec une mémoire de données (9) et un processeur (5) commandant le dispositif d'affichage (7), **caractérisé en ce**
**qu'**à chaque valeur IQ est affectée une adresse de la mémoire de données (9) et qu'à chaque adresse de la mémoire de données (9) est affecté un pixel du dispositif d'affichage (7),
en ce que le dispositif pour enregistrer sous chaque adresse de cette mémoire de données (9) une information affectée à chaque valeur IQ est installée et
en ce que le processeur (5) est relié directement à la sortie IQ du démodulateur (2) et est conçu de façon à ce qu'il détermine pour chaque valeur IQ l'adresse de valeur IQ correspondante dans la mémoire de données (9).

2. Dispositif selon la revendication 1, **caractérisé en ce que** le dispositif pour enregistrer une durée de maintien de pixel prescrite sous chaque adresse de la mémoire de données (9) lors de l'apparition de la valeur IQ correspondante est installée.

3. Dispositif selon la revendication 1 ou 2, **caractérisé en ce que** le dispositif pour enregistrer sous chaque adresse de la mémoire de données (9) la fréquence avec laquelle une adresse et ainsi la valeur IQ correspondante a été déterminée dans un temps de saisie prescrit, est installée.
